# EUROPÄISCHE PATENTANMELDUNG

(11) **EP 1 484 160 A1**
(43) Veröffentlichungstag der Anmeldung: **08.12.2004**
(21) Anmeldenummer: 04006158.2
(22) Anmeldetag: 16.03.2004
(51) Int. Cl.: B29C 49/12, B29C 49/78, H02K 41/03

(54) **Vorrichtung zur Blasformung von Behältern mit einer von linearem Motor angetriebenen Reckstange**

(30) Priorität: 04.06.2003 DE 10325229
(71) Anmelder: SIG Technology Ltd., 8212 Neuhausen Rhine Falls (CH)
(72) Erfinder: Herklotz, Thorsten, 22926 Ahrensburg (DE); Vogel, Klaus, 222885 Barsbüttel (DE)
(74) Vertreter: Klickow, Hans Henning,Dr.-Ing.

(57) **Zusammenfassung**

Die Vorrichtung dient zur Blasformung von Behältern (2) und weist mindestens eine Blasform (4) auf, die im Bereich einer Blasstation (3) angeordnet ist. Die Blasstation (3) ist mit einer Reckstange (11) versehen, die von einem Reckstangenträger (41) positionierbar ist. Der Reckstangenträger (41) ist mit einer Antriebseinrichtung gekoppelt. Die Antriebseinrichtung ist als ein Linearmotor (50) ausgebildet, der mit einem Regler (59,63) verbunden ist. Der Regler (59,63) gibt eine Stellgröße für den Linearmotor (50) in Abhängigkeit von einem Vergleich zwischen einem Sollwertverlauf und einem meßtechnisch erfaßten Istwert für eine jeweilige Positionierung der Reckstange (11) vor. Der Sollwertverlauf ist im Bereich eines Sollwertspeichers (65) abgespeichert.

## Beschreibung

Die Erfindung betrifft eine Vorrichtung zur Blasformung von Behältern, die mindestens eine Blasform aufweist, die im Bereich einer Blasstation angeordnet ist und die mit mindestens einer Reckstange versehen ist, die von einem Reckstangenträger positionierbar ist, der mit einer Antriebseinrichtung gekoppelt ist

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Realisierung der Antriebseinrichtungen des Reckstangenträgers sind bereits unterschiedliche Ausführungsformen bekannt. Beispielsweise ist es möglich, die Reckstange unter Verwendung eines pneumatischen Zylinders zu positionieren. Nachteilig ist hierbei, daß eine exakte Vorgabe einer jeweiligen Reckposition zu einem bestimmten zeitpunkt nicht möglich ist, da sich die Positionierung der Reckstange in Abhängigkeit von den vom pneumatischen Zylinder erzeugten Druckkräften sowie den einwirkenden Gegenkräften einstellt. Die Gegenkräfte resultieren zum einen aus der Blasluft, die in die Blasform eingeleitet wird, darüber hinaus treten auch Reibungskräfte und Trägheitskräfte auf. Diese Parameter sind häufig zeitlich veränderlich, so daß die Durchführung des Reckvorganges nicht in einem engen Toleranzband vorgegeben werden kann.

Gemäß einer weiteren bekannten Ausführungsform erfolgt die Positionierung der Reckstange unter Verwendung einer Kurvensteuerung. Derartige Kurvensteuerungen sind insbesondere bei rotierenden Blasrädern von Vorteil, da feststehende Steuerkurven verwendet werden können. Kurvensteuerungen weisen eine sehr hohe Positioniergenauigkeit und Reproduktionsgenauigkeit auf. Nachteilig ist jedoch ein relativ hoher Aufwand, wenn beim Wechsel des herzustellenden Produktes Änderungen am durchzuführenden Reckvorgang erforderlich sind.

Ebenfalls ist es bereits bekannt, eine Positionierung der Reckstange unter Verwendung eines Servomotors durchzuführen. Derartige Servomotoren weisen zwar eine hohe Steuergenauigkeit auf und Änderungen des Reckvorganges können relativ einfach vorgegeben werden, hinsichtlich der zu realisierenden Kompaktheit und Robustheit bei einwirkenden Produktionsbedingungen sowie im Hinblick auf die Größe der zu erzeugenden Reckkräfte weisen Servomotoren aber nicht die erforderliche mechanische Stabilität sowie eine geeignete konstruktive Ausbildung zur Verwendung bei Anlagen zur Blasformung von Behältern auf. Der Einsatz von Servomotoren ist deshalb nicht über erste Ansätze hinausgelangt. Nachteilig bei der Verwendung von Servomotoren ist insbesondere auch, daß diese stets mit einer mechanischen Lineareinheit, beispielsweise einer Spindel oder einem Zahnriemen, betrieben werden müssen. Darüber hinaus sind Getriebe zur Bewegungsumsetzung erforderlich. Aus diesen konstruktiven Randbedingungen resultieren ein mechanisches Spiel sowie ein vergleichsweise kleiner Wirkungsgrad.

Aufgabe der vorliegenden Erfindung ist es, eine Vorrichtung der einleitend genannten Art derart zu konstruieren, daß der Reckvorgang mit hoher Genauigkeit, guter Reproduktionsqualität sowie einfacher Anpaßbarkeit bei gleichzeitig kompakter und mechanisch belastbarer Gestaltung der verwendeten Bauelemente durchführbar ist.

Diese Aufgabe wird erfindungsgemäß dadurch gelöst, daß die Antriebseinrichtung als ein Linearmotor ausgebildet ist, der mit einem Regler verbunden ist, der eine Stellgröße für den Linearmotor in Abhängigkeit von einem Vergleich zwischen einem Sollwertverlauf und einem meßtechnisch erfaßten Istwert für eine jeweilige Positionierung der Reckstange vorgibt und daß der Sollwertverlauf im Bereich eines Sollwertspeichers abgespeichert ist.

Durch die Ausbildung der Antriebseinrichtung als Linearmotor wird ein Antriebselement verwendet, daß bei geringen räumlichen Abmessungen eine hohe mechanische Belastbarkeit bereitstellt und zur Erzeugung genau dosierbarer großer Kräfte verwendet werden kann. Durch den Regelkreis und die unmittelbare meßtechnische Auswertung einer aktuellen tatsächlichen Positionierung der Reckstange wird ein vorgegebenes Bewegungsprofil exakt eingehalten, da der Linearmotor mit einer hohen Dynamik und somit nur geringen zeitlichen Verzögerungen geregelt werden kann.

Durch die Verwendung des Linearmotors werden mechanische Bewegungsumwandlungen über Getriebe oder ähnliche Einrichtungen vermieden. Darüber hinaus wird eine hohe Qualität der blastechnisch hergestellten Behälter dadurch gewährleistet, daß die Reckposition und der Einschaltpunkt der ersten Hochdruckstufe exakt vorgegeben und reproduzierbar eingehalten werden. Selbst kleinste Ungenauigkeiten führen zu einer Verminderung der Flaschenqualität, da beispielsweise bei einer Reckgeschwindigkeit von 1 m/s eine zeitliche Schwankung von 1 ms zu einer Veränderung des Reckweges von 1 mm führt. Derartige Variationen beim Reckvorgang führen zu Auswirkungen auf die Materialverteilung im geblasenen Behälter.

Beim Einsatz von Linearmotoren kann der Reckvorgang sowie der Blasvorgang bei Verwendung eines rotierenden Blastrades in Abhängigkeit von der jeweiligen Rotationspositionierung des Blasrades gradabhängig gesteuert werden. Aufgrund der Genauigkeit der verwendeten Signalgeber lassen sich Streuungen bei der Koordinierung einer jeweiligen Reckposition zu einem Blasdruckverlauf auf wenige Mikrosekunden reduzieren.

Aufgrund der Abspeicherung des Sollwertverlaufes im Bereich eines Sollwertspeichers kann beispielsweise programmtechnisch ein vorgegebener Sollwertverlauf definiert und dem Regler zur Verfügung gestellt werden. Ebenfalls ist auf diesem Wege eine einfache Anpaßbarkeit an unterschiedliche zu fertigende Produkte möglich. Konstruktiv können der Reckstangenträger und die Reckstange als separate und miteinander verbundene Bauteile oder als gemeinsames integrales Bauteil realisiert sein. Insbesondere ist auch daran gedacht, den Reckstangenträger als einteilige Verlängerung der Reckstange auszubilden und direkt durch den Linearmotor zu beaufschlagen bzw. sogar als Teil des Linearmotors zu realisieren.

Zur Vermeidung örtlich verteilter aktiver Bauelemente wird vorgeschlagen, daß der Linearmotor einen Grundträger aufweist, auf dem in Richtung einer Bewegungsorientierung hintereinander mit alternierenden Magnetisierungsrichtungen positionierte Permanentmagnete angeordnet sind.

Eine kompakte Ausführung wird dadurch unterstützt, daß der Linearmotor einen Schlitten aufweist, auf dem mindestens zwei Elektromagneten angeordnet sind.

Ein Optimum an individueller Steuerbarkeit wird dadurch bereitgestellt, daß jede Blasstation mit einem eigenen Linearmotor ausgestattet ist.

Ebenfalls trägt es für eine Anpaßbarkeit an unterschiedliche Anwendungsanforderungen bei, daß jede Blasstation mit einem eigenen Regler ausgestattet ist.

Eine örtlich komprimierte Energieerzeugung wird dadurch unterstützt, daß die Elektromagneten als um einen Magnetkern herum angeordnete Spulen ausgebildet sind.

Zu einer steuerungstechnisch einfach umsetzbaren Realisierung von Bewegungsrichtung und Bewegungsgeschwindigkeit trägt es bei, daß die Spulen mit einer relativ zueinander phasenversetzten Ansteuerung versehen sind.

Eine übersichtliche Steuerungs- und Regelungsstruktur wird dadurch erreicht, daß die Spulen relativ zueinander gleiche Spulenabstände aufweisen.

Ebenfalls trägt es zu einer einfachen Systemstruktur bei, daß die Permanentmagneten relativ zueinander im wesentlichen gleiche Magnetabstände aufweisen.

Ein kontinuierlicher Bewegungsablauf bei beliebigen relativen Positionierungen zwischen dem Schlitten und dem Basiselement wird dadurch unterstützt, daß die Spulenabstände relativ zu den Magnetabständen unterschiedlich dimensioniert sind.

Zu einem einfachen Konstruktionskonzept für größere Schlitten trägt es bei, daß jeweils mehrere Spulen zu einer Spulengruppe zusammengefaßt sind.

Ein Einsatz preiswerter und umfangreich erprobter elektronischer Bauelemente wird dadurch unterstützt, daß die Spulen an eine mehrphasige Drehstromversorgung angeschlossen sind.

Für eine mechanische Führung des Schlittens wird vorgeschlagen, daß der Schlitten in Schienen gelagert ist.

Ein typisches Regelungskonzept wird dadurch realisiert, daß im Bereich des Sollwertspeichers ein Reckweg-Zeit-Profil abgespeichert ist.

Zur Erreichung einer einfachen Umschaltbarkeit des Reckverhaltens bei einem Produktwechsel trägt es bei, daß im Bereich des Sollwertspeichers mindestens zwei wahlweise aktivierbare Reckweg-Zeit-Profile abgespeichert sind.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Blasstation, bei der das Recksystem mit einem Linearmotor ausgestattet ist,
- Fig. 6: eine Seitenansicht der Vorrichtung gemäß Blickrichtung VI in Figur 5 und
- Fig. 7: eine schematische Darstellung zur Veranschaulichung des Funktionsprinzips eines Linearmotors.

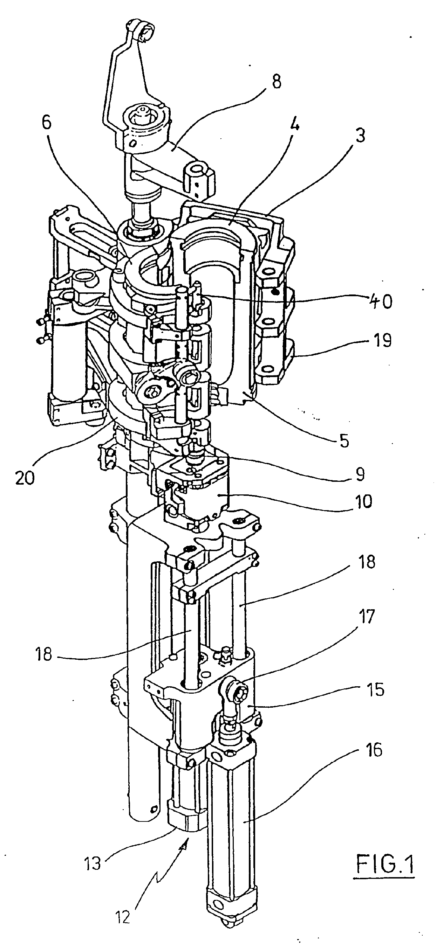

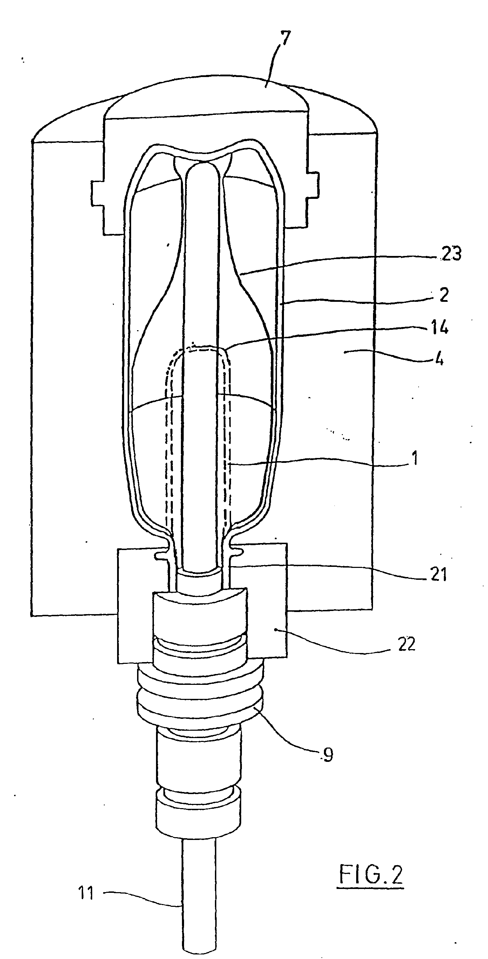

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die bereichsweise von einem Zylinder (12) positioniert wird. Gemäß einer anderen Ausführungsform wird eine bereichsweise mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist ein Teil des Recksystems derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

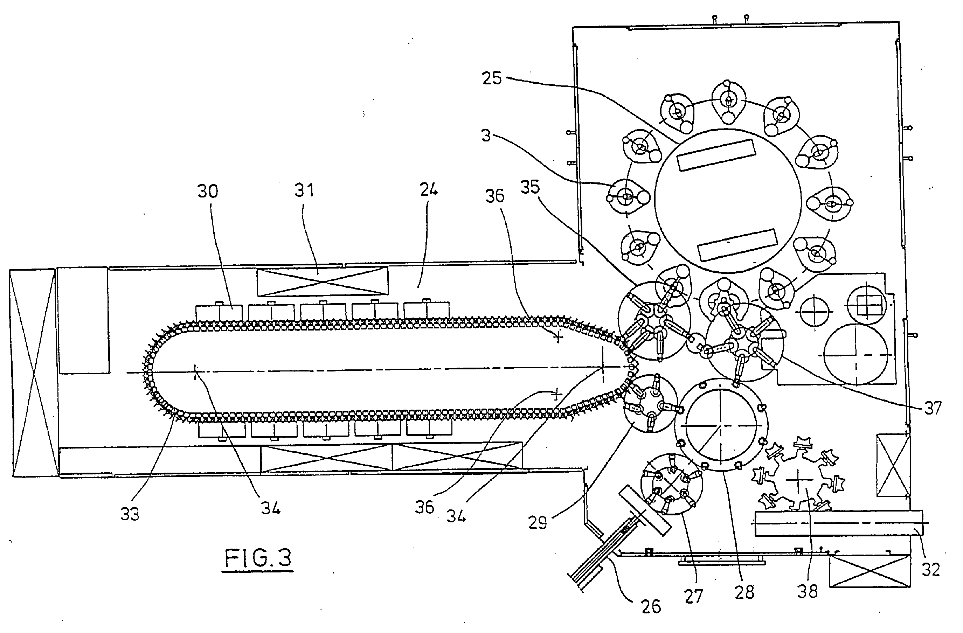

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

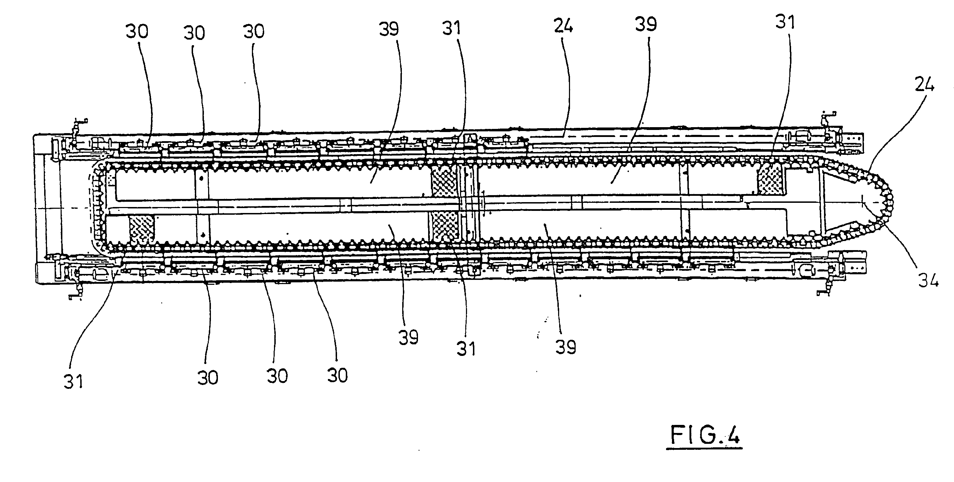

In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

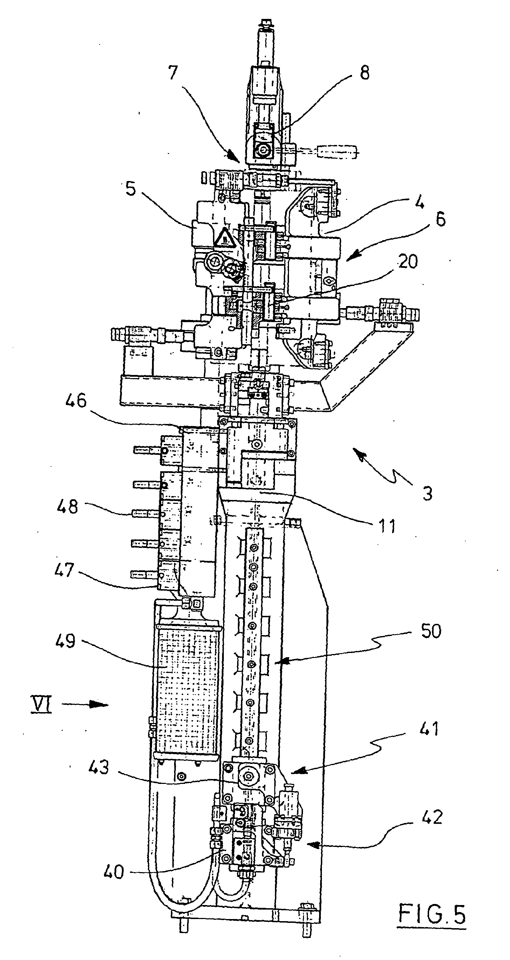

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangenträger (41) gehaltert ist, der aus einem Trägersockel (40) und einem über ein Kupplungselement (42) mit dem Trägersockel (40) verbundenen Tragelement (43) ausgebildet ist.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden. Die Verwendung des beschriebenen Kupplungselementes (42) ist somit nicht von einem Einsatz bei einer vollständigen mechanischen Steuerung des Reckvorganges beschränkt, sondern kann insbesondere auch bei gemischten elektrischen, mechanischen und/oder pneumatischen Steuerungen eingesetzt werden.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

In Figur 5 ist darüber hinaus der Einbauort für einen Linearmotor (50) zu erkennen, der zur Positionierung der Reckstange (11) bzw. des Reckstangenträgers (41) verwendet ist.

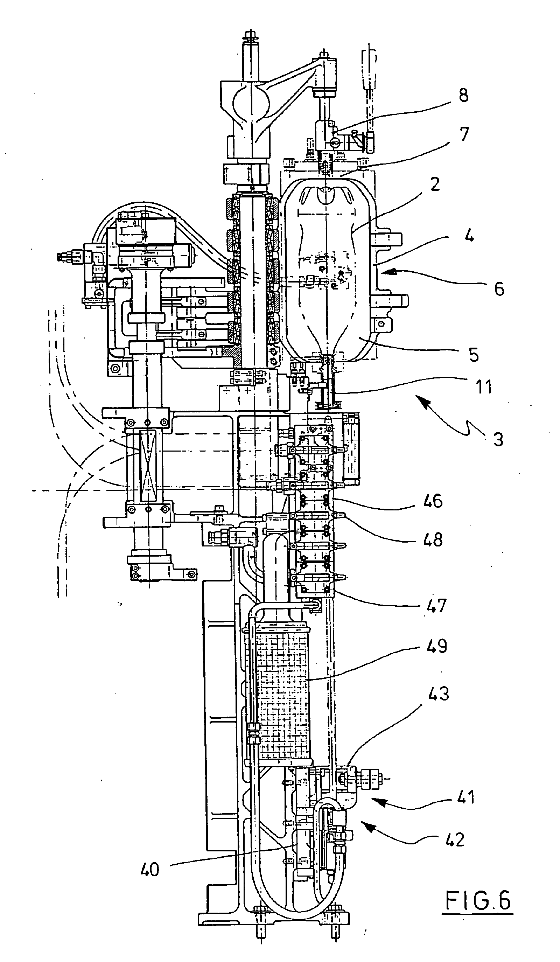

Figur 6 veranschaulicht die Blasstation gemäß Figur 3 in einer anderen Blickrichtung. Der Einbauort des Linearmotors (50) wird bei dieser Darstellung im wesentlichen vom Schalldämpfer (49) sowie vom Pneumatikblock (46) verdeckt.

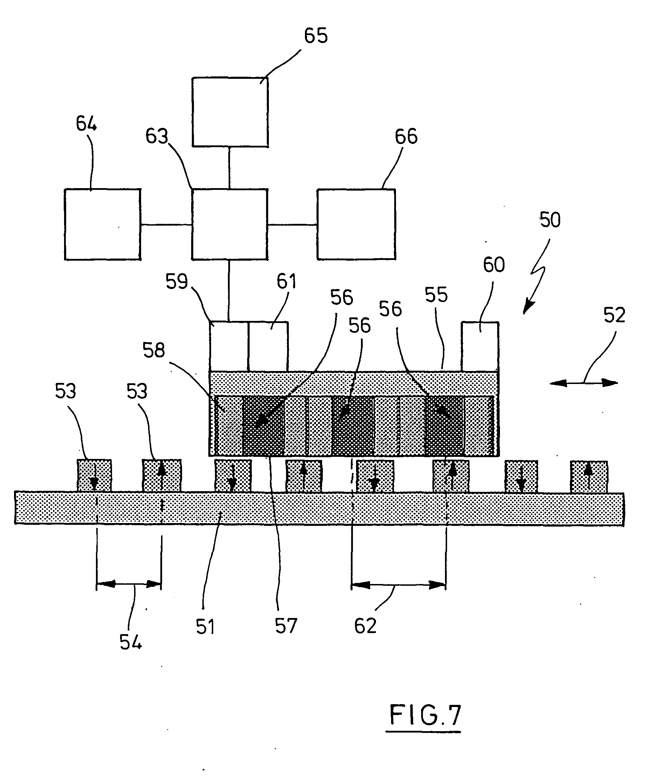

Figur 7 veranschaulicht den Aufbau des Linearmotors (50) sowie der angeschlossenen Bedien- und Regeleinrichtungen. Der Linearmotor (50) besteht im wesentlichen aus einem Grundträger (51), auf dem in Richtung einer Bewegungsorientierung (52) abwechselnd Permanentmagneten (53) mit ihren Magnetisierungspolen alternierend orientiert angeordnet sind. Die Magnetisierungsrichtungen verlaufen hierbei im wesentlichen senkrecht zum Grundträger (51). Die Permanentmagneten (53) weisen hinsichtlich ihrer Mittellinien relativ zueinander Magnetabstände (54) auf, die relativ zueinander im wesentlichen identisch dimensioniert sind.

Im Bereich eines Schlittens (55) sind Elektromagneten (56) angeordnet, die als um einen Magnetkern (57) herum angeordnete Spulen (58) ausgebildet sind. Die Spulen (58) sind an einen Regler (59) angeschlossen. Beim dargestellten Ausführungsbeispiel ist der Regler (59) im Bereich des Schlittens (55) angeordnet. Ebenfalls sind im dargestellten Ausführungsbeispiel im Bereich des Schlittens (55) auch ein Positionssensor (60) sowie eine lokale Energieversorgung (63) positioniert. Die Mittellinien der Elektromagneten (56) weisen relativ zueinander einen Spulenabstand (62) auf. Die Spulenabstände (62) sind relativ zueinander im wesentlichen gleich dimensioniert. Relativ zu den Magnetabständen (54) weisen die Spulenabstände (62) eine abweichende Dimensionierung auf.

Der Regler (59) ist mit einem externen Regler (63) verbunden, der an einer Bedieneinheit (64) angeschlossen ist. Darüber hinaus ist der Regler (63) an einen Sollwertspeicher (65) sowie eine externe Energieversorgung (66) angeschlossen.

Eine Bewegung des Schlittens (55) relativ zum Grundträger (51) wird durch einen Stromphasenwechsel in den Spulen (58) verursacht. Über die Geschwindigkeit des Phasenwechsels erfolgt eine Vorgabe der Translationsgeschwindigkeit des Schlittens (55). Aufgrund der vorgegebenen Stromstärke wird die Bewegungskraft definiert. Durch eine Erhöhung oder Senkung der Stromstärke kann somit die Motorkraft beeinflußt werden.

Gemäß einer vorteilhaften Ausführungsform werden jeweils Gruppen aus drei Spulen (58) aufgebaut, wobei die Spulen (58) an ein mehrphasiges Drehstromsystem angeschlossen sind. Bei drei zu einer Gruppe zusammengefaßten Spulen (58) wird ein dreiphasiges Drehstromsystem realisiert. Bei einer gegenüber Figur 7 längeren Ausführung des Schlittens (55) werden eine Mehrzahl von Spulengruppen in Bewegungsorientierung (52) hintereinander angeordnet.

Für eine mechanische Führung des Schlittens (55) können Schienen oder Luftlager eingesetzt werden. Die Schienen geben die Positionierung des Schlittens (55) senkrecht und quer zur Bewegungsorientierung (52) vor.

## Patentansprüche

1. Vorrichtung zur Blasformung von Behältern, die mindestens eine Blasform aufweist, die im Bereich einer Blasstation angeordnet ist und die mit mindestens einer Reckstange versehen ist, die von einem Reckstangenträger positionierbar ist, der mit einer Antriebseinrichtung gekoppelt ist, **dadurch gekennzeichnet, daß** die Antriebseinrichtung als ein Linearmotor (50) ausgebildet ist, der mit einem Regler (59, 63) verbunden ist, der eine Stellgröße für den Linearmotor (50) in Abhängigkeit von einem Vergleich zwischen einem Sollwertverlauf und einem meßtechnisch erfaßten Istwert für eine jeweilige Positionierung der Reckstange (11) vorgibt und daß der Sollwertverlauf im Bereich eines Sollwertspeichers (65) abgespeichert ist.

2. Vorrichtung nach Anspruch 1, **dadurch gekennzeichnet, daß** der Linearmotor (50) einen Grundträger (51) aufweist, auf dem in Richtung einer Bewegungsorientierung (52) hintereinander mit alternierenden Magnetisierungsrichtungen positionierte Permanentmagnete (53) angeordnet sind.

3. Vorrichtung nach Anspruch 1 oder 2, **dadurch gekennzeichnet, daß** der Linearmotor (50) einen Schlitten (55) aufweist, auf dem mindestens zwei Elektromagneten (56) angeordnet sind.

4. Vorrichtung nach einem der Ansprüche 1 bis 3, **dadurch gekennzeichnet, daß** jede Blasstation (3) mit einem eigenen Linearmotor (50) ausgestattet ist.

5. Vorrichtung nach einem der Ansprüche 1 bis 4, **dadurch gekennzeichnet, daß** jede Blasstation (3) mit einem eigenen Regler (59) ausgestattet ist.

6. Vorrichtung nach einem der Ansprüche 1 bis 5, **dadurch gekennzeichnet, daß** die Elektromagneten (56) als um einen Magnetkern (57) herum angeordnete Spulen (58) ausgebildet sind.

7. Vorrichtung nach einem der Ansprüche 1 bis 6, **dadurch gekennzeichnet, daß** die Spulen (58) mit einer relativ zueinander phasenversetzten Ansteuerung versehen sind.

8. Vorrichtung nach einem der Ansprüche 1 bis 7, **dadurch gekennzeichnet, daß** die Spulen (58) relativ zueinander gleiche Spulenabstände (62) aufweisen.

9. Vorrichtung nach einem der Ansprüche 1 bis 8, **dadurch gekennzeichnet, daß** die Permanentmagneten (53) relativ zueinander im wesentlichen gleiche Magnetabstände (54) aufweisen.

10. Vorrichtung nach einem der Ansprüche 1 bis 9, **dadurch gekennzeichnet, daß** die Spulenabstände (62) relativ zu den Magnetabständen (54) unterschiedlich dimensioniert sind.

11. Vorrichtung nach einem der Ansprüche 1 bis 10, **dadurch gekennzeichnet, daß** jeweils mehrere Spulen (58) zu einer Spulengruppe zusammengefaßt sind.

12. Vorrichtung nach einem der Ansprüche 1 bis 11, **dadurch gekennzeichnet, daß** die Spulen (58) an eine mehrphasige Drehstromversorgung angeschlossen sind.

13. Vorrichtung nach einem der Ansprüche 1 bis 12, **dadurch gekennzeichnet, daß** der Schlitten (55) in Schienen gelagert ist.

14. Vorrichtung nach einem der Ansprüche 1 bis 13, **dadurch gekennzeichnet, daß** im Bereich des Sollwertspeichers (65) ein Reckweg-Zeit-Profil abgespeichert ist.

15. Vorrichtung nach einem der Ansprüche 1 bis 14, **dadurch gekennzeichnet, daß** im Bereich des Sollwertspeichers (65) mindestens zwei wahlweise aktivierbare Reckweg-Zeit-Profile abgespeichert sind.
